## Europäisches Patentamt

## European Patent Office

## Office européen des brevets

(19)

(11) Veröffentlichungsnummer: **0 116 672**
**B1**

(12) # EUROPÄISCHE PATENTSCHRIFT

(45) Veröffentlichungstag der Patentschrift:
**27.08.86**

(51) Int. Cl.⁴: **B 60 Q 3/04**

(21) Anmeldenummer: **83104511.7**

(22) Anmeldetag: **07.05.83**

(54) Schaltungsanordnung für eine Beleuchtungseinrichtung in Autoradios.

(30) Priorität: **01.02.83 DE 3303259**

(43) Veröffentlichungstag der Anmeldung:
**29.08.84 Patentblatt 84/35**

(45) Bekanntmachung des Hinweises auf die Patenterteilung:
**27.08.86 Patentblatt 86/35**

(84) Benannte Vertragsstaaten:
**AT DE FR GB IT**

(56) Entgegenhaltungen:
**DE - A - 2 620 786**
**US - A - 4 324 986**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Fischelmayer, Heinrich, Siebenbürgener Strasse 13, D-8502 Zirndorf (DE)**

ACTORUM AG

**Beschreibung**

Die Erfindung betrifft eine Schaltungsanordnung für eine Beleuchtungseinrichtung in Autoradios, wobei die Beleuchtungseinrichtung über den Geräteschalter des Autoradios oder gleichzeitig mit der Armaturenbeleuchtung einschaltbar ist.

Es ist bekannt, dass bei Autoradios das Skalenfeld und teils die Bedienungsteile beleuchtbar sind. Durch die Kombination eines Autoradios mit einem Gerät für Magnetbandkassetten bedurfte es einer Erweiterung der beleuchtbaren Flächen am Autoradio. Die zu beleuchtenden Bereiche am Autoradio wurden ferner durch beleuchtbare Frequenzanzeigefelder und andere Signaleinrichtungen erweitert. Es zeigte sich, dass insbesondere bei Nachtfahrten die Gesamthelligkeit der beleuchtbaren Autoradiobereiche eine Beeinträchtigung des Fahrers ergeben. Um nun einerseits die Bedienbarkeit eines Autoradios auch im Dunkeln eines Kraftfahrzeuges zu erleichtern, ist bekannt, dass die Beleuchtung des Autoradios mit der in ihrer Helligkeit regelbaren Armaturenbeleuchtung des Kraftfahrzeuges gekoppelt ist. Nachteilig ist hierbei, dass die Autoradiobeleuchtung auf die volle Helligkeit gebracht wird, sobald das Autoradio selbst über den eigenen Geräteschalter in Betrieb gesetzt wird.

Der Erfindung liegt daher die Aufgabe zugrunde, eine Schaltungsanordnung für eine Beleuchtungseinrichtung in Autoradios zu schaffen, die unabhängig von der Helligkeit im Inneren des Kraftfahrzeuges eine ungehinderte und blendfreie Bedienung des Autoradios erlaubt.

Diese Aufgabe wird erfindungsgemäss durch die im kennzeichnenden Teil des Anspruchs 1 angegebenen Merkmale gelöst.

Mit der erfindungsgemässen Schaltungsanordnung kann die Beleuchtungseinrichtung für das Autoradio über den Geräteschalter und über den Schalter für die Armaturenbeleuchtung eingeschaltet werden, und die Helligkeit der Lichtquellen ist über den dem Armaturenbeleuchtungsschalter zugeordneten Helligkeitsregler zu verändern, unabhängig ob das Autoradio selbst eingeschaltet ist oder nicht. Ferner kann über den Geräteschalter des Autoradios ein zusätzlicher Beleuchtungsbereich eingeschaltet werden. Weiterhin leuchten bei nur eingeschaltetem Autoradio — Tagfahrt — die gesamten Lichtquellen der Beleuchtungseinrichtung mit voller Helligkeit.

Die Erfindung wird im folgenden unter Bezugnahme auf eine Schaltungszeichnung näher erläutert.

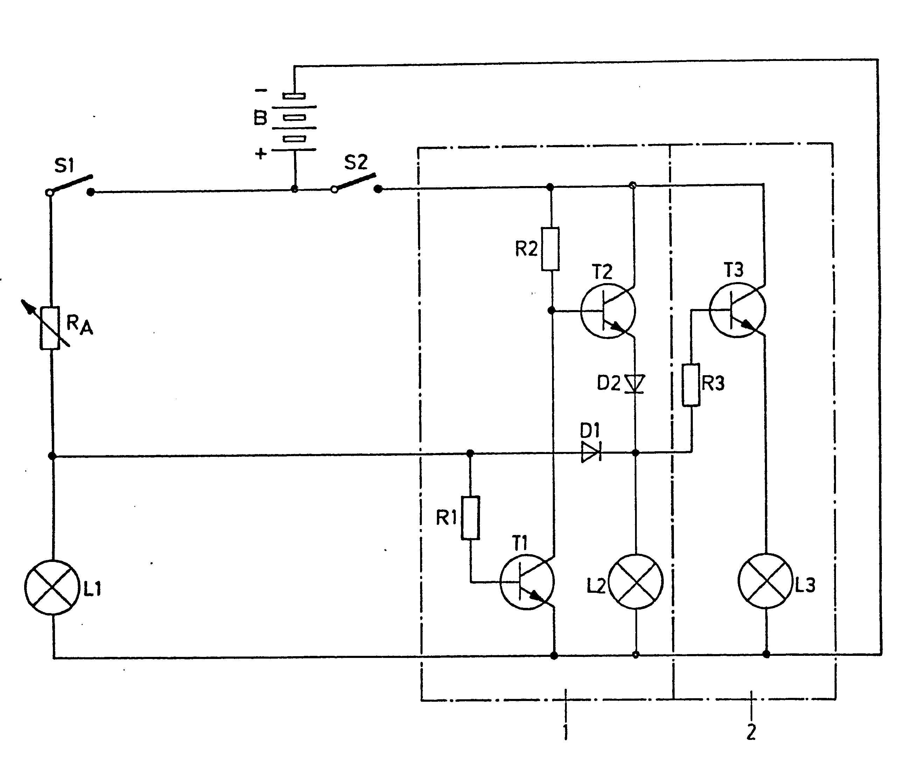

Die in der Zeichnung angedeutete Armaturenbeleuchtung L1 eines Kraftfahrzeuges wird durch eine Bordbatterie B gespeist, und die Helligkeit der Lichtquelle ist über einen veränderbaren Widerstand $R_A$ regelbar. Die Beleuchtungseinrichtung für das Autoradio besteht aus den Schaltungsstufen 1 und 2, die strichpunktiert in die Schaltungszeichnung eingetragen sind. Die Armaturenbeleuchtung ist über einen Schalter S1 einzuschalten. Das Autoradio wird einschliesslich der Beleuchtungseinrichtung über einen Geräteschalter S2 mit der Stromversorgung durch die Bordbatterie B verbunden. Wird der Schalter S1 geschlossen, so ist die Armaturenbeleuchtung L1 und über eine Diode D1 die Lichtquelle L2 der Beleuchtungseinrichtung des Autoradios eingeschaltet. Über den regelbaren Widerstand $R_A$ ist die Helligkeit der Lichtquelle von L1 und L2 regelbar. Bei eingeschaltetem Autoradio (Schliessen des Schalters S2) und nicht eingeschalteter Armaturenbeleuchtung fliesst der Batteriestrom über den Transistor T2 und die Diode D2 nach L2, wobei die Diode D2 lediglich der Erhöhung der $U_{EBO}$ von T2 dient.

Ist das Autoradio mit Beleuchtungseinrichtung und die Armaturenbeleuchtung durch Schliessen der Schalter S1 und S2 eingeschaltet, so sperrt der Transistor T1 den Transistor T2, und die Stromversorgung der Lichtquelle L2 ist nur über den regelbaren Stromkreis der Armaturenbeleuchtung möglich. Die beiden Basiswiderstände R1 und R2 an T1 und T2 weisen nach vorgeschlagener Schaltung einen Wert von 10 kOhm auf. Der Transistor T2 wird durch den Transistor T1 gesperrt, sobald die Spannung des Armaturen-Beleuchtungsstromkreises grösser 0,7 V ist.

Nach der Schaltungsstufe 2 kann eine Lichtquelle L3 für einen bestimmten Beleuchtungsbereich des Autoradios nur über den Geräteschalter S2 des Autoradios eingeschaltet werden. Hierbei wird die Lichtquelle L3 über einen Transistor T3 mit Strom aus der Bordbatterie versorgt, wobei der Transistor über den Basiswiderstand R3, der mit der Diode D1 verbunden ist, angesteuert wird. Hierdurch ist auch die Helligkeit der Lichtquelle über den Regler $R_A$ veränderbar, sofern die Armaturenbeleuchtung eingeschaltet ist.

**Patentansprüche**

1. Schaltungsanordnung für eine Beleuchtungseinrichtung in Autoradios, wobei die Beleuchtungseinrichtung über den Geräteschalter (S2) des Autoradios oder gleichzeitig mit der Armaturenbeleuchtung (S1, L1) einschaltbar ist, dadurch gekennzeichnet, dass durch eine erste Schaltungsstufe (1) die Lichtquelle der Beleuchtungseinrichtung (L2) unabhängig vom Betriebszustand des Autoradios über die Armaturenbeleuchtung (L1) einschalt- und regelbar (S1, $R_A$) ist, dass bedarfsweise nur über den Geräteschalter (S2) durch eine zweite Schaltungsstufe (2) ein bestimmter Beleuchtungsbereich (L3) des Autoradios unabhängig von der übrigen Lichtquelle einschaltbar ist, und dass ferner in bekannter Weise bei nicht eingeschalteter Armaturenbeleuchtung (L1, S1) die Gesamtbeleuchtung (L2, L3) des Autoradios mit vorgegebener Grundhelligkeit über den Geräteschalter (S2) einschaltbar ist.

2. Schaltungsanordnung für eine Beleuchtungseinrichtung in Autoradios nach Anspruch 1, dadurch gekennzeichnet, dass die erste Schaltungsstufe (1) die Lichtquelle (L2) der Beleuchtungseinrichtung einerseits über eine Diode (D1) mit Strom aus der Bordbatterie (B) bei eingeschalteter Armaturenbeleuchtung (S1) und andererseits bei eingeschaltetem Autoradio (S2) über einen Transistor (T2) versorgt, wobei bei eingeschalteter Armaturenbeleuchtung und eingeschaltetem Autoradio (S1 und S2) der Transistor (T1) den Transistor (T2) sperrt, und die Stromversorgung der Lichtquellen (L1, L2) nur über den regelbaren Armaturen-Beleuchtungsstromkreis möglich ist.

3. Schaltungsanordnung für eine Beleuchtungseinrichtung in Autoradios nach einem der Ansprüche 1 und 2, dadurch gekennzeichnet, dass die zweite Schaltungsstufe (2) eine Lichtquelle (L3) für einen bestimmten Beleuchtungsbereich des Autoradios über einen Transistor (T3) nur bei eingeschaltetem Autoradio (S2) mit dem Stromkreis der Bordbatterie verbindet, wobei der Transistor (T3) über den Basiswiederstand (R3), der mit der Diode (D1) verbunden ist, angesteuert wird.

## Claims

1. Circuit arrangement for an illumination device in car radios, wherein the illumination device can be switched on via the equipment switch (S2) of the car radio or at the same time as the instrument illumination (S1, L1), characterized in that the light source of the illumination device (L2) can be switched on and controlled (S1, $R_A$) via the instrument illumination (L1) by a first circuit stage (1) independently of the operating condition of the car radio, that, if necessary, a certain area of illumination (L3) of the car radio can be switched on independently of the remaining light source only via the equipment switch (S2) by a second circuit stage (2) and that in addition the total illumination (L2, L3) of the car radio can be switched on in familiar manner via the equipment switch (S2) with a predetermined background brightness when the instrument illumination (L1, S1) is not switched on.

2. Circuit arrangement for an illumination device in car radios according to claim 1, characterized in that the first circuit stage (1) supplies the light source (L2) of the illumination device, on the one hand, via a diode (D1) with power from the on-board battery (B) when the instrument illumination (S1) is switched on and, on the other hand, via a transistor (T2) when the car radio (S2) is switched on, in which arrangement the transistor (T1) disables the transistor (T2) and the light sources (L1, L2) can be supplied with power only via the controllable instrument illumination circuit when the instrument illumination is switched on and the car radio is switched on (S1, S2).

3. Circuit arrangement for an illumination device in car radios according to one of claims 1 and 2, characterized in that the second circuit stage (2) connects a light source (L3) for a certain area of illumination of the car radio via a transistor (T3) to the circuit of the on-board battery only when the car radio (S2) is switched on, in which arrangement the transistor (T3) is actuated via the base resistor (R3) which is connected to the diode (D1).

## Revendications

1. Circuit de commutation d'un dispositif d'éclairage d'autoradios, le dispositif d'éclairage pouvant être mis sous tension par l'intermédiaire de l'interrupteur (S2) de l'autoradio ou en même temps que l'éclairage du tableau de bord (S1, L1), caractérisé en ce qu'un premier étage de commutation (1) permet de mettre sous tension et de régler (S1, $R_A$) la source lumineuse du dispositif d'éclairage (L2) indépendamment de la marche ou de l'arrêt de l'autoradio par l'intermédiaire de l'éclairage du tableau de bord (L1), en ce qu'au besoin, une zone d'éclairage déterminée (L3) de l'autoradio peut être mise sous tension par un deuxième étage de commutation (2), uniquement par l'intermédiaire de l'interrupteur de l'appareil (S2) et indépendamment de l'autre source lumineuse, et en ce que par ailleurs, d'une manière connue, l'éclairage général (L2, L3) de l'autoradio peut être mis sous tension avec une luminosité de base définie, par l'intermédiaire de l'interrupteur de l'appareil (S2), lorsque l'éclairage du tableau de bord (L1, S1) est coupé.

2. Circuit de commutation d'un dispositif d'éclairage d'autoradio selon la revendication 1, caractérisé en ce que le premier étage de commutation (1) assure l'alimentation en courant provenant de la batterie de bord (B) de la source lumineuse (L2) du dispositif d'éclairage, d'une part par l'intermédiaire d'une diode (D1) lorsque l'éclairage du tableau de bord (S1) fonctionne, et d'autre part par l'intermédiaire d'un transistor (T2) lorsque l'autoradio (S2) est en service, cependant que le transistor (T1) bloque le transistor (T2) lorsque l'éclairage du tableau de bord et l'autoradio (S1 et S2) fonctionnent, et que l'alimentation en courant des sources lumineuses (L1, L2) n'est possible que par l'intermédiaire du circuit réglable d'éclairage du tableau de bord.

3. Circuit de commutation d'un dispositif d'éclairage d'autoradio selon l'une quelconque des revendications 1 ou 2, caractérisé en ce que le deuxième étage de commutation (2) relie une source lumineuse (L3) d'une zone d'éclairage déterminée de l'autoradio au circuit de la batterie de bord, par l'intermédiaire d'un transistor (T3), uniquement lorsque l'autoradio (S2) est en service, le transistor (T3) étant commandé par l'intermédiaire de la résistance de base (R3) reliée à la diode (D1).

0 116 672